# EUROPÄISCHE PATENTSCHRIFT

(11) **EP 2 740 948 B1**
(45) Veröffentlichungstag und Bekanntmachung des Hinweises auf die Patenterteilung: **30.03.2016**
(21) Anmeldenummer: 13184025.8
(22) Anmeldetag: 12.09.2013
(51) Int. Cl.: F16C 23/08, F16C 25/08, F16C 19/54

(54) **Axialpendelrollenlageranordnung, insbesondere für eine Schiffantriebswelle**
Axial spherical roller bearing assembly, in particular for a ship drive shaft
Agencement de roulement à rouleaux sphérique axial, notamment pour un arbre d'entraînement de bateau

(30) Priorität: 07.12.2012 DE 102012222502
(43) Veröffentlichungstag der Anmeldung: 11.06.2014
(73) Patentinhaber: Schaeffler Technologies AG & Co. KG, 91074 Herzogenaurach (DE)
(72) Erfinder: Breetzmann, Philipp, 91058 Erlangen (DE)

(56) Entgegenhaltungen:
- WO-A2-2012/097962
- DE-A1- 4 411 760
- US-A1- 2006 023 985

## Beschreibung

Die Erfindung betrifft eine Axialpendelrollenlageranordnung, mit einem ersten Lageraußenring, einem zweiten Lageraußenring, einem ersten Lagerinnenring, einem zweiten Lagerinnenring, sowie mit ballig-konoidisch ausgebildeten Wälzkörpern, die unter Bildung von zwei Wälzkörperlaufreihen in einem zwischen dem jeweiligen Lageraußenring und dem zugeordneten Lagerinnenring definierten Ringraum aufgenommen sind, bei der die beiden Lagerinnenringe miteinander axial gekoppelt sind, bei der die Wälzkörperachsen der Wälzkörper der ersten Wälzkörperlaufreihe sowie die Wälzkörperachsen der Wälzkörper der zweiten Wälzkörperlaufreihe auf einem ersten Kegelmantel beziehungsweise einem zweiten Kegelmantel umlaufen, bei der die Spitzen der jeweiligen Kegelmäntel in einem Zwischenbereich zwischen den äußeren axialen Stirnseiten der Lagerinnenringe liegen, und bei der eine Spanneinrichtung zum axialen Spannen der Lageraußenringe gegen die Wälzkörper der ersten und der zweiten Wälzkörperlaufreihe vorhanden ist.

Derartige Axialpendelrollenlageranordnungen können insbesondere durch zwei in sogenannter O-Anordnung zusammengesetzte Axialpendelrollenlager gebildet werden. Die so geschaffene Lageranordnung zeichnet sich durch eine hohe axiale Tragfähigkeit aus und lässt bei Schwerlastsystemen typische Winkel- und Fluchtungsfehler beim Umlauf der gelagerten Welle in au s-reichendem Maße zu.

Insbesondere bei schweren Ausführungen derartiger Lageranordnungen besteht das Problem, dass bei Reduktion der axialen Lagerlast, sowie insbesondere bei axialer Lagerluft die Wälzkörper mit Schlupf abwälzen. Hierdurch wird die Lebensdauer der Lageranordnung verkürzt.

Vor diesem Hintergrund ist aus der US 2006/0 023 985 A1 ein Kegelrollenlager bekannt, welches in einem Gehäuse zwei Innenringe und zwei Außenringe aufweist, auf deren Laufbahnen kegelförmige Wälzkörper in zwei Reihen nebeneinander angeordnet sind. Zur Redzierung des Lagerspiels ist an jeder der beiden axialen Seiten eines radial nach innen weisenden Gehäusevorsprungs ein ringförmiger Piezo-Aktuator angeordnet, die bei deren Betätigung eine Axialkraft auf den jeweils zugeordneten Lageraußenring ausüben.

Außerdem ist aus der DE 44 11 760 A1 ein zweireihiges Kegelrollenlager mit balligen Wälzkörpern bekannt, deren Längsachsen sich innerhalb der axialen Abmessungen des Wälzlagers mit einer Wälzlagermittenachse schneiden.

### Aufgabe der Erfindung

Der Erfindung liegt die Aufgabe zugrunde, eine Axialpendelrollenlageranordnung, insbesondere für eine Schiffantriebswelle zu schaffen, bei welcher etwaiger beim Abwälzen der Wälzkörper auftretender Schlupf reduziert werden kann.

### Erfindungsgemäße Lösung

Die Aufgabe wird durch eine Axialpendelrollenlageranordnung mit den Merkmalen des Anspruchs 1 gelöst. Vorteilhafte Weiterbildungen sind den Unteransprüchen entnehmbar.

Die Erfindung betrifft demnach eine Axialpendelrollenlageranordnung, mit einem ersten Lageraußenring, einem zweiten Lageraußenring, einem ersten Lagerinnenring, einem zweiten Lagerinnenring, sowie mit ballig-konoidisch ausgebildeten Wälzkörpern, die unter Bildung von zwei Wälzkörperlaufreihen in einem zwischen dem jeweiligen Lageraußenring und dem zugeordneten Lagerinnenring definierten Ringraum aufgenommen sind, bei der die beiden Lagerinnenringe miteinander axial gekoppelt sind, bei der die Wälzkörperachsen der Wälzkörper der ersten Wälzkörperlaufreihe sowie die Wälzkörperachsen der Wälzkörper der zweiten Wälzkörperlaufreihe auf einem ersten Kegelmantel beziehungsweise einem zweiten Kegelmantel umlaufen, bei der die Spitzen der jeweiligen Kegelmantel in einem Zwischenbereich zwischen den äußeren axialen Stirnseiten der Lagerinnenringe liegen, und bei der eine Spanneinrichtung zum axialen Spannen der Lageraußenringe gegen die Wälzkörper der ersten und der zweiten Wälzkörperlaufreihe vorhanden ist.

Zur Lösung der Aufgabe ist bei dieser Axialpendelrollenlageranordnung außerdem vorgesehen, dass die Spanneinrichtung mehr als zwei Stelltriebe aufweist, dass die Stelltriebe an in Umfangsrichtung abfolgenden Positionen axial zwischen den beiden Lageraußenringen angeordnet sind, und dass die Spanneinrichtung mittels ihrer Stelltriebe axial beidseitig unmittelbar auf die axial zueinander weisenden Stirnflächen der beiden Lageraußenringe wirkt.

Diese Axialpendelrollenlageranordnung ermöglicht es, große axial gerichtete Kräfte aufzunehmen, und mit einem moderaten apparativen Aufwand eine auf den jeweiligen Betriebszustand optimal flexibel abgestimmte axiale Vorspannung der Wälzkörper einzustellen.

Gemäß einer vorteilhaften Weiterbildung ist vorgesehen, dass sich die beiden Lageraußenringe axial innen an einer radial nach innen weisenden Ringstufe eines Gehäuses der Axialpendelrollenlageranordnung axial abstützen, und dass die Spanneinrichtung mit ihren mehr als zwei Stelltrieben radial innerhalb der Ringstufe des Gehäuses angeordnet ist.

Dadurch, dass die Stelltriebe axial beidseitig unmittelbar auf die axial zueinander weisenden Stirnflächen der beiden Lageraußenringe wirken, und weil die Spanneinrichtung mit ihren mehr als zwei Stelltrieben radial innerhalb der Ringstufe des Gehäuses angeordnet ist, ist das Axialpendelrollenlager vergleichsweise kompakt ausgebildet.

Gemäß einer Ausführungsform ist vorgesehen, dass die Spanneinrichtung mit ihren mehr als zwei Stelltrieben in eine Ringkammer eingesetzt ist, welche durch ein als Trägerbauteil dienendes Ringelement gebildet ist.

Weiter ist bei dieser Ausführungsform bevorzugt vorgesehen, dass die Spanneinrichtung mittels des Ringelements schwimmend zwischen den beiden Lageraußenringen angeordnet ist.

Gemäß einer anderen Weiterbildung der Erfindung ist vorgesehen, dass die Stelltriebe als Spannmodule ausgebildet sind, wobei jedes Spannmodul zumindest einen elektrischen Stellmotor und einen Spindeltrieb oder einen Planetenwälzgewindetrieb oder einen Kugelgewindespindeltrieb aufweist.

Weiter ist bevorzugt vorgesehen, dass jedes Spannmodul eine Kraftmesseinrichtung zur Messung der mittels der elektromechanischen Spanneinrichtung generierten Spannkraft auf die beiden Lageraußenringe aufweist.

Gemäß einer nicht erfindungsgemäßen anderen Ausführungsform ist vorgesehen, dass an das Ringelement radial innen ein Stufenring aufweist, dass das Ringelement den Stufenring axial verschiebbar führt, und dass sich die Stelltriebe der Spanneinrichtung an dem Stufenring axial abstützen.

Schließlich ist bevorzugt vorgesehen, dass sich die Spanneinrichtung mittels des Ringelements radial außen an einer nach radial innen weisenden Ringstufe eines Lagergehäuses abstützt.

Die elektromechanischen Stelltriebe sind vorzugsweise derart aufgebaut, dass diese einen als Spindeltrieb ausgeführten elektromotorischen Stelltrieb aufweist. Der Spindeltrieb kann dabei gemäß einem besonderen Aspekt der vorliegenden Erfindung als sogenannter Planetenwälzgewindetrieb (PWG-Spindeltrieb) ausgeführt sein. Die Auslegung dieses Spindeltriebs kann so getroffen sein, dass dieser im Wesentlichen selbsthemmend ist, und seinen Einstellzustand nur durch aktives Anlegen eines Stelldrehmoments an die entsprechenden Komponenten des Spindeltriebs verändert. Alternativ zu der Ausführung des Spindeltriebs als Schraubenspindeltrieb (mit Gleitkontakt zwischen Mutter und Spindel) oder als Planetenwälzgewindetrieb (mit Wälzkontakt zwischen den Wälzplaneten und der Spindel) ist es auch möglich, den Spindeltrieb als Kugelgewindetrieb auszuführen. Bei dieser Variante ist vorzugsweise eine Brems- oder Sperreinrichtung vorgesehen, welche das jeweilige Spindelelement gegen unvorhergesehene Drehung sperrt. Diese Brems- oder Sperreinrichtung kann im Zusammenspiel mit dem Stellmotor realisiert sein, indem dieser beispielsweise einen axial in eine Bremsstellung belasteten konischen Rotor aufweist, der zur Durchführung einer Stellrotation temporär auf elektromagnetischem Wege aus dieser Bremsstellung ausgerückt wird.

Insbesondere bei jener Ausführungsform des elektromechanischen Stelltriebs mit axial spa n-nenden Spindeltrieben ist es möglich, mehrere jeweils eine Druckspindel und einen Stellmotor aufweisende Spannmodule an mehreren in Umfangsrichtung abfolgenden Positionen zwischen den Lageraußenringen angreifen zu lassen. Eine hinreichend symmetrische Lastverteilung kann dabei erreicht werden, indem drei derartige elektromechanische Stelltriebe unter einer Teilung von 120° zwischen den Außenringen positioniert sind und gegebenenfalls direkt oder unter Zwischenlage von anderweitigen Bauteilen an diesen angreifen.

Gemäß einem besonderen Aspekt der vorliegenden Erfindung ist eine Kraftmesseinrichtung, zur Messung der seitens der elektromechanischen Spanneinrichtung generierten Spannkraft vorgesehen. Soweit die axiale Spannkraft durch mehrere einzelne Stellmodule generiert wird, ist vorzugsweise jedem dieser Stellmodule eine Kraftmesseinrichtung zugeordnet.

Die Ansteuerung der elektromechanischen Spanneinrichtung, insbesondere der einzelnen Spannmodule derselben, erfolgt vorzugsweise über eine elektronische Steuereinrichtung. Diese kann derart mit den Kraftmesseinrichtungen gekoppelt sein, dass die Spannkraft über einen geschlossenen Regelkreis nach Maßgabe eines Sollwerts eingeregelt wird. Die elektronische Steuereinrichtung kann so ausgelegt sein, dass diese bei einer Inbetriebnahme des Systems einen Eichzyklus durchfährt, in welchem zunächst alle Spannmodule entlastet werden, und dann eine definierte Lagerbelastung eingestellt wird. Die Steuereinrichtung kann dabei so ausgelegt sein, dass diese auch eine Plausibilitätskontrolle der seitens der Kraftmesseinrichtungen generierten Signale unter Rückgriffnahme auf den Motorleistungsbezug, insbesondere den Motorstrom des jeweiligen Stelltriebs, vornimmt.

Unter ballig-konoide Wälzkörper sind im Kontext der vorliegenden Beschreibung Wälzkörper zu verstehen, welche eine im Axialschnitt ballige, insbesondere in der Art eines Kreislinienabschnitts gekrümmte Mantelfläche aufweisen und dabei derart kegelartig ausgebildet sind, dass der jeweilige Wälzkörper einen Axialendbereich mit einem kleinen Durchmesser und einen Axialendbereich mit größerem Durchmesser aufweist. Diese Wälzkörper werden durch die Laufringe derart geführt, dass die Wälzkörperachsen auf einer Kegelfläche um die Lagerachse umlaufen und die Wälzkörper dabei derart orientiert sind, dass diese mit ihrem hinsichtlich des Durchmessers kleineren Axialendbereich der Lagerachse zugewandt sind.

Bei der Axialpendelrollenlageranordnung gemäß der Erfindung ist vorgesehen, dass sich die elektromechanische Spanneinrichtung axial zwischen den Lageraußenringen befindet. Die elektromechanische Spanneinrichtung ist hierbei derart ausgebildet, dass die durch diese aufgebrachte axiale Spannkraft einstellbar ist. Hierzu kann die elektromechanische Spanneinrichtung gemäß einer Ausführungsform in ein als Trägerbauteil fungierendes Ringelement eingesetzt. Dieses Ringelement ist in vorteilhafter Weise so aufgebaut, dass dieses eine Ringkammer bildet, in welcher mehrere axial spannenden Spannmodule in im Wesentlichen gleichförmiger Umfangsteilung aufgenommen sind.

Das die elektromechanischen Stellmodule tragende Ringelement kann als Gehäuse- und Trägerteil einer eigenständigen Baugruppe fungieren und ist entsprechend mit den einzelnen elektromechanischen Stellmodulen bestückt, so dass letztlich eine Maschinenkomponente geschaffen ist, die in der Art eines "elektromotorisch breitenvariablen" Stützringes bei der Montage der Lageranordnung zwischen die Lageraußenringe eingefügt wird.

Vorzugsweise ist eine elektronische Regeleinrichtung vorgesehen, durch welche die über die elektromechanische Spanneinrichtung generierte Axialkraft nach Maßgabe des momentanen Betriebszustandes, insbesondere Axiallastzustandes, eingestellt wird. Durch das Regelsystem kann die durch die einzelnen Spannmodule generierte Spannkraft erfasst und reguliert werden, so dass zum Zeitpunkt eines auftretenden Lastfalles eine hierbei vorteilhafte Vorspannung im Lager eingestellt wird. Mit dieser Vorspannung können Schädigungen durch Schlupf vermieden werden.

Es ist in vorteilhafter Weise weiterhin möglich, in die Lageranordnung eine Federeinrichtung einzubinden, welche der Aufbringung einer der Stellkraft der Spanneinrichtung entgegen gerichteten Rückstellkraft dient. Diese Federeinrichtung kann beispielsweise als Teller- oder Wellenfederausgeführt sein. Die Spanneinrichtung ist weiterhin vorzugsweise so aufgebaut, dass durch diese die Einhaltung einer Mindestvorspannung und die Nichtüberschreitung einer maximalen Vorspannung gewährleistet werden.

### Kurzbeschreibung der Figuren

Weitere Einzelheiten und Merkmale der Erfindung ergeben sich aus der nachfolgenden Beschreibung in Verbindung mit der Zeichnung. Es zeigt:
Figur 1 eine vereinfachte Axialschnittdarstellung zur Veranschaulichung des Aufbaus einer erfindungsgemäßen Axialpendelrollenlageranordnung, bei welcher über eine elektromechanische Spanneinrichtung die axiale Lagervorspannung variabel einstellbar ist;
Figur 2 eine weitere vereinfachte Axialschnittdarstellung zur Veranschaulichung des Aufbaus einer erfindungsgemäßen Axialpendelrollenlageranordnung, mit einem elektromechanischen Linearmotor zur Einstellung der axialen Lagervorspannung.

### Ausführliche Beschreibung der Figuren

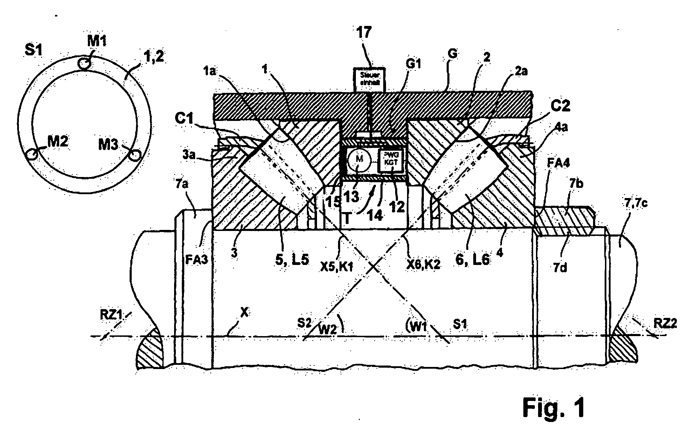

In Figur 1 ist eine erfindungsgemäße Axialpendelrollenlageranordnung dargestellt. Diese weist einen ersten Lageraußenring 1, einen zweiten Lageraußenring 2, sowie einen ersten Lagerinnenring 3 und einen zweiten Lagerinnenring 4 auf.

In einem zwischen dem ersten Lageraußenring 1 und dem ersten Lagerinnenring 3 gebildeten ersten Wälzkörperumlaufraum sowie in einem zwischen dem zweiten Lageraußenring 2 und dem zweiten Lagerinnenring 4 gebildeten zweiten Wälzkörperumlaufraum sind ballig-konoidisch ausgebildete Wälzkörper 5, 6 aufgenommen, die in diesen Wälzkörperumlaufräumen eine erste Wälzkörperlaufreihe sowie eine zweite Wälzkörperlaufreihe bilden.

Der erste Lagerinnenring 3 und der zweite Lagerinnenring 4 sind über die durch diese Lagerringe 3, 4 gelagerte Wellenstruktur 7 miteinander axial gekoppelt. Hierzu ist an der Wellenstruktur 7 eine Stützschulter 7a ausgebildet, an welcher der erste Lagerinnenring 3 ansteht. Weiterhin sitzt auf der Wellenstruktur eine Stützmutter 7b, die hier mit der Welle 7c über einen Gewindeabschnitt 7d in Eingriff steht.

Die genannten Lagerringe 1, 2, 3, 4 und die Wälzkörper 5, 6 sind so gestaltet und angeordnet, dass die Wälzkörperachsen X5 der Wälzkörper 5 der ersten Wälzkörperlaufre ihe sowie die Wälzkörperachsen X6 der Wälzkörper 6 der zweiten Wälzkörperlaufreihe auf einem ersten beziehungsweise einem zweiten Kegelmantel K1, K2 umlaufen, und die Spitzen S1, S2 der jeweiligen Kegelmantel K1, K2 in einem Zwischenbereich zwischen den äußeren axialen Stirnseiten FA3, FA4 der Lagerinnenringe 3, 4 liegen.

Die hier gezeigte Lageranordnung zeichnet sich dadurch aus, dass in einem zwischen den Lageraußenringen 1, 2 liegende Axialbereich eine elektromechanische Spanneinrichtung T vorgesehen ist, zum axialen Spannen der Lageraußenringe 1, 2 gegen die Wälzkörper 5, 6 und weiter gegen die Lagerinnenringe 3, 4 der ersten und der zweiten Wälzkörperlaufreihe in einstellbar veränderbarer Weise.

Die elektromechanische Spanneinrichtung T ist derart ausgebildet, dass die durch diese aufgebrachte axiale Spannkraft einstellbar veränderbar ist. Die elektromechanische Spanneinrichtung T ist hier als elektromechanischer Gewindestelltrieb ausgeführt und umfasst eine Spindeleinrichtung 12, die über einen Stellmotor 13 angetrieben wird. Der Stellmotor 13 ist hier als Schrittmotor ausgebildet, der über ein hier nicht näher dargestelltes Übersetzungsgetriebe kinematisch mit der Spindeleinrichtung 12 gekoppelt ist. Der Stellmotor 13 wird über eine elektronische Steuereinheit 17 abgesteuert. Diese elektronische Steuereinheit 17 verarbeitet mehrere für den Betrieb der Lageranordnung relevante Parameter, wie zum Beispiel die Wellendrehzahl, die Lagertemperatur, die Lastrichtung und insbesondere die aktuelle axiale Lagervorspannung. Diese aktuelle Lagervorspannung wird hier durch eine Kraftmesseinrichtung 15 erfasst und in Form entsprechender Signale der Steuereinrichtung 17 zugeführt.

Nach Maßgabe des an der Spindeleinrichtung 12 anliegenden, durch den Stellmotor 13 generierten Motordrehmoments übt die Spindeleinrichtung 12 auf das Außenringelement 1 eine entsprechende Axialkraft aus und drängt damit diesen Lageraußenring 1 axial nach außen. Hierdurch wird das Laufspiel der Wälzkörper 5, 6 der beiden Laufreihen L5, L6 reduziert. Durch definierte Erhöhung des Motordrehmoments kann die Axialkraft der Spindeleinrichtung 12 weiter erhöht werden. Hierbei wird nach Beseitigung des Lagerspiels die Pressung der Wälzkörper 5, 6 zwischen den Innenringen 3, 4 und den zugeordneten Außenringen 1, 2 erhöht. Diese Pressung wird vorzugsweise auf einen Pegel erhöht, bei welchem sich ein gefordertes Betriebsverhalten des Lagers, insbesondere ein weitgehend schlupffreies Abwälzen der Wälzkörper 5, 6 in der Lageranordnung einstellt.

Die Spindeleinrichtung 12 und der dieser zugeordnete Stellmotor 13 können zu einem Spannmodul M1, M2, M3 zusammengefasst sein, wobei mehrere derartige Spannmodule M1, M2, M3 - wie in der eingefügten Skizze S1 veranschaulicht - in gleichmäßiger Umfangsteilung abfolgend an den Lageraußenringen 1, 2 angreifen. Vorzugsweise umfasst jedes dieser Spannmodule M1, M2, M3 eine eigene Kraftmesseinrichtung 15. Diese Spannmodule M1, M2, M3 und die Messwerte der jeweiligen Kraftmesseinrichtung 15 werden dann mittels der gemeinsamen Steuereinheit 17 überwacht, und der jeweilige Stellmotor 13 wird entsprechend angesteuert.

Die elektromechanische Spanneinrichtung T ist über das genannte Ringelement 14 axial schwimmend zwischen den Lageraußenringen 1, 2 angeordnet, wobei dieses Ringelement 14 in einer Ringstufe G1 eines Lagergehäuses G zentriert sitzt.

Die Regeleinrichtung 17 ist mit mehreren Sensorsystemen gekoppelt, über welche hinsichtlich des momentanen Betriebszustandes indikative Signale erfasst werden können.

An den Lagerinnenringen 3, 4 sind Ringschultern 3a, 4a ausgebildet, durch welche die Wälzkörper 5, 6 geführt werden. Die Wälzkörper 5, 6 werden zudem jeweils durch eine Käfigeinrichtung C1, C2 geführt. Die jeweilige Käfigeinrichtung C1, C2 ist zum Beispiel als Fensterkäfig oder Kammkäfig ausgeführt und am jeweiligen Lagerinnenring 3, 4 in radialer Richtung angestützt.

Die Lageraußenringe 1, 2 bilden jeweils Laufbahnen 1a, 2a, die in dem hier gezeigten Axialschnitt konkav gekrümmt sind. Die Krümmung ist gleichmäßig. Die Krümmung szentren RZ1, RZ2 liegen auf der Lagerachse X. Die Anstellwinkel W1, W2 der Wäl zkörperachsen liegen vorzugsweise im Bereich von 30° bis 75°, insbesondere bei ca. 45°. Bei der hier gezeigten Auslegung bietet die Lageranordnung sowohl in axialer als auch in radialer Richtung hohe Stützkräfte.

Beim Zusammenbau der Lageranordnung kann über die Stützmutter eine geforderte Kalt-Mindestvorspannung oder Kalt-Lagerluft eingestellt werden. Die elektromechanische Spanneinrichtung T wird hierzu in einen Stellzustand minimaler Ausfahrung gebracht. Die Lageraußenringe 1, 2 stützen sich axial in dem Gehäuse G, insbesondere der Ringstufe G1, ab. Bei Eintreten eines entsprechenden Lastfalles wird über die elektromechanische Stelleinrichtung T die axiale Vorspannung erhöht. Da die beiden Lagerinnenringe 3, 4 auf der Welle 7 axial abgestützt sind, wird nach Maßgabe der durch die elektromechanische Spanneinrichtung T aufgebrachten Axialkraft die Axialspannung auf die Wälzkörper 5, 6 erhöht. Hierdurch wird sichergestellt, dass die Wälzkörper 5, 6 auf den Lagerringen 1,2,3,4 weitgehend schlupffrei abwälzen.

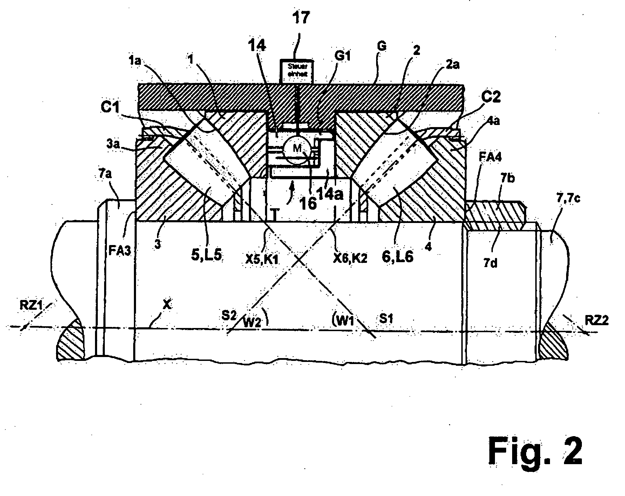

Das Ausführungsbeispiel nach Figur 2 unterscheidet sich von der Ausführungsform nach Figur 1 hinsichtlich des inneren Aufbaus der elektromechanischen Spanneinrichtung. Hinsichtlich des allgemeinen Lageraufbaus und der im Folgenden nicht weiter angesprochenen, in Figur 2 jedoch enthaltenen Bezugszeichen, wird auf die Ausführungen zu Figur 1 verwiesen.

Bei dem Ausführungsbeispiel nach Figur 2 ist die zur Einstellung der axialen Lagervorspannung vorgesehene elektromechanische Spanneinrichtung T durch mehrere elektromechanische Lineartriebmodule 16 gebildet. Bei diesen Lineartriebmodulen 16 erfolgt eine direkte Konversion der über die Steuereinheit 17 zugeführten elektrischen Leistung in eine lineare Stellarbeitsbewegung. Die Lineartriebmodule 16 können hierzu insbesondere Piezoelemente aufweisen, welche unter Wirkung einer elektrischen Spannung eine entsprechende Volumenänderung erfahren und damit eine axiale Stellbewegung veranlassen. Die Lineartriebmodule 16 sind an ein Ringelement 14 angebunden und über dieses in die Lageranordnung eingesetzt. An das Ringelement 14 ist ein Stufenring 14a angesetzt, der an dem Ringelement 14 axial verschiebbar geführt ist. Der Stufenring 14a bildet eine innere Stützfläche, an welcher die Lineartriebmodule 16 angreifen.

Die erfindungsgemäß unmittelbar zwischen den Wälzkörperlaufreihen L5, L6 angeordnete elektromechanische Spanneinrichtung T kann auch so aufgebaut sein, dass die hier gezeigten Ringelemente 14, 14a über ein Feingewinde miteinander in Engriff stehen und auf elektromechan i-schem Wege gegeneinander verdreht werden. Der elektromechanische Antrieb kann hierbei wiederum in eines der beiden Ringelemente 14, 14a eingebunden werden, so dass die elektromechanische Spanneinheit insgesamt als ringartige Maschinenkomponente erscheint, die als solche im Rahmen des Lagereinbaus zwischen die Lagerringe 1, 2 eingesetzt und mit der Steuereinheit 17 verkabelt wird. Die elektromechanische Spanneinrichtung T kann dann über entsprechende elektrische Ansteuerung und elektrische Leistungszufuhr durch die Steuereinheit 17 so betrieben werden, dass diese eine geforderte Lagerluft beziehungsweise Lagervorspannung einstellt.

### Bezugszeichenliste

- 1: Lageraußenring
- 2: Lageraußenring
- 3: Lagerinnenring
- 3a: Ringschultern
- 4: Lagerinnenring
- 4a: Ringschultern
- 5: Wälzkörper
- 6: Wälzkörper
- 7: Wellenstruktur
- 7a: Stützschulter
- 7b: Stützmutter
- 7c: Welle
- 7d: Gewindeabschnitt
- 12: Spindeleinrichtung
- 13: Stellmotor
- 14: Ringelement
- 14a: Stufen ring
- 15: Kraftmesseinrichtung
- 16: Lineartriebmodule
- 17: Steuereinheit
- C2: Käfigeinrichtung
- C2: Käfigeinrichtung
- FA3: Stirnseite
- FA4: Stirnseite
- G: Lagergehäuse
- G1: Ringstufe
- K1: Kegelmantel
- K2: Kegelmantel
- L5: Wälzkörperlaufreihen
- L6: Wälzkörperlaufreihen
- M1: Spannmodul
- M2: Spannmodul
- M3: Spannmodul
- RZ1: Krümmungszentrum
- RZ2: Krümmungszentrum
- S1: Spitzen
- S2: Spitzen
- T: Spann- od. Stelleinrichtung
- X5: Wälzkörperachse
- X6: Wälzkörperachse

## Patentansprüche

1. Axialpendelrollenlageranordnung, mit einem ersten Lageraußenring (1), einem zweiten Lageraußenring (2), einem ersten Lagerinnenring (3), einem zweiten Lagerinnenring (4), sowie mit ballig-konoidisch ausgebildeten Wälzkörpern (5, 6), die unter Bildung von zwei Wälzkörperlaufreihen in einem zwischen dem jeweiligen Lageraußenring (1, 2) und dem zugeordneten Lagerinnenring (3, 4) definierten Ringraum aufgenommen sind, bei der die beiden Lagerinnenringe (3, 4) miteinander axial gekoppelt sind, bei der die Wälzkörperachsen (X5) der Wälzkörper (5) der ersten Wälzkörperlaufreihe sowie die Wälzkörperachsen (X6) der Wälzkörper (6) der zweiten Wälzkörperlaufreihe auf einem ersten Kegelmantel (K1) beziehungsweise einem zweiten Kegelmantel (K2) umlaufen, bei der die Spitzen (S1, S2) der jeweiligen Kegelmäntel (K1, K2) in einem Zwischenbereich zwischen den äußeren axialen Stimseiten (FA3, FA4) der Lagerinnenringe (3, 4) liegen, und bei der eine Spanneinrichtung (T) zum axialen Spannen der Lageraußenringe (1, 2) gegen die Wälzkörper (5, 6) der ersten und der zweiten Wälzkörperlaufreihe vorhanden ist, **dadurch gekennzeichnet, dass** die Spanneinrichtung (T) mehr als zwei Stelltriebe aufweist, dass die Stelltriebe an in Umfangsrichtung abfolgenden Positionen axial zwischen den beiden Lageraußenringen (1, 2) angeordnet sind, und dass die Spanneinrichtung (T) mittels ihrer Stelltriebe axial beidseitig unmittelbar auf die axial zueinander weisenden Stirnflächen der beiden Lageraußenringe (1, 2) wirkt.

2. Axialpendelrollenlageranordnung nach Anspruch 1, **dadurch gekennzeichnet, dass** sich die beiden Lageraußenringe (1, 2) axial innen an einer radial nach innen weisenden Ringstufe (G1) eines Gehäuses (G) der Axialpendelrollenlageranordnung axial abstützen, und dass die Spanneinrichtung (T) mit ihren mehr als zwei Stelltrieben radial innerhalb der Ringstufe (G1) des Gehäuses (G) angeordnet ist.

3. Axialpendelrollenlageranordnung nach Anspruch 1 oder 2, **dadurch gekennzeichnet, dass** die Spanneinrichtung (T) mit ihren mehr als zwei Stelltrieben in eine Ringkammer eingesetzt ist, welche durch ein als Trägerbauteil dienendes Ringelement (14) gebildet ist.

4. Axialpendelrollenlageranordnung nach Anspruch 3, **dadurch gekennzeichnet, dass** die Spanneinrichtung (T) mittels des Ringelements (14) schwimmend zwischen den beiden Lageraußenringen (1, 2) angeordnet ist.

5. Axialpendelrollenlageranordnung nach einem der Ansprüche 1 bis 4, **dadurch gekennzeichnet, dass** die Stelltriebe als Spannmodule (M1, M2, M2) ausgebildet sind, wobei jedes Spanhmodul (M1, M2, M2) zumindest einen elektrischen Stellmotor (13) und einen Spindeltrieb (12) oder einen Planetenwälzgewindetrieb oder einen Kugelgewindespindeltrieb aufweist.

6. Axialpendelrollenlageranordnung nach Anspruch 5, **dadurch gekennzeichnet, dass** jedes Spannmodul (M1, M2, M2) eine Kraftmesseinrichtung (15) zur Messung der mittels der elektromechanischen Spanneinrichtung (T) generierten Spannkraft auf die beiden Lageraußenringe (1, 2) aufweist.

7. Axialpendelrollenlageranordnung nach einem der Ansprüche 3 bis 6, **dadurch gekennzeichnet, dass** sich die Spanneinrichtung (T) mittels des Ringelements (14) radial außen an der nach radial innen weisenden Ringstufe (G1) eines Lagergehäuses (G) abstützt.

## Claims

1. Axial self-aligning roller bearing arrangement, having a first bearing outer ring (1), having a second bearing outer ring (2), having a first bearing inner ring (3), having a second bearing inner ring (4) and having rolling bodies (5, 6) which are of sphericalconoidal form and which, forming two rolling-body running rows, are received in a ring-shaped chamber defined between the respective bearing outer ring (1, 2) and the associated bearing inner ring (3, 4), wherein the two bearing inner rings (3, 4) are coupled to one another axially, wherein the rolling body axes (X5) of the rolling bodies (5) of the first rolling-body running row and the rolling body axes (X6) of the rolling bodies (6) of the second rolling-body running row revolve on a first conical envelope (K1) and on a second conical envelope (K2) respectively, wherein the tips (S1, S2) of the respective conical envelopes (K1, K2) lie in an intermediate region between the outer axial face sides (FA3, FA4) of the bearing inner rings (3, 4), and wherein a clamping device (T) is provided for axially clamping the bearing outer rings (1, 2) against the rolling bodies (5, 6) of the first and of the second rolling-body running row, **characterized in that** the clamping device (T) has more than two control drives, **in that** the control drives are arranged at positions, situated in succession in a circumferential direction, axially between the two bearing outer rings (1, 2), and **in that** the clamping device (T), by way of its control drives, acts axially at both sides directly on the face surfaces, facing axially toward one another, of the two bearing outer rings (1, 2).

2. Axial self-aligning roller bearing arrangement according to Claim 1, **characterized in that** the two bearing outer rings (1, 2) are axially supported axially at the inside on a radially inwardly pointing ring-shaped step (G1) of a housing (G) of the axial self-aligning roller bearing arrangement, and **in that** the clamping device (T) with its more than two control drives is arranged radially within the ring-shaped step (G1) of the housing (G).

3. Axial self-aligning roller bearing arrangement according to Claim 1 or 2, **characterized in that** the clamping device (T) with its more than two control drives is inserted into a ring-shaped chamber which is formed by a ring-shaped element (14) which serves as carrier component.

4. Axial self-aligning roller bearing arrangement according to Claim 3, **characterized in that** the clamping device (T) is, by way of the ring-shaped element (14), arranged in floating fashion between the two bearing outer rings (1, 2).

5. Axial self-aligning roller bearing arrangement according to one of Claims 1 to 4, **characterized in that** the control drives are in the form of clamping modules (M1, M2, M2), wherein each clamping module (M1, M2, M2) has at least one electric control motor (13) and a spindle drive (12) or a planetary rolling screw drive or a ball screw spindle drive.

6. Axial self-aligning roller bearing arrangement according to Claim 5, **characterized in that** each clamping module (M1, M2, M2) has a force measurement device (15) for the measurement of the clamping force, generated by way of the electromechanical clamping device (T), on the two bearing outer rings (1, 2).

7. Axial self-aligning roller bearing arrangement according to one of Claims 3 to 6, **characterized in that** the clamping device (T) is, by way of the ring-shaped element (14), supported radially at the outside against the radially inwardly pointing ring-shaped step (G1) of a bearing housing (G).

## Revendications

1. Agencement de palier à rouleaux sphériques axial, comprenant une première bague de palier externe (1), une deuxième bague de palier externe (2), une première bague de palier interne (3), une deuxième bague de palier interne (4), ainsi que des corps de roulement (5, 6) de forme bombée-conoïdale, qui sont reçus en formant deux rangées de roulement de corps de roulement dans un espace annulaire défini entre la bague de palier externe respective (1, 2) et la bague de palier interne associée (3, 4), les deux bagues de palier internes (3, 4) étant accouplées axialement l'une à l'autre, les axes de corps de roulement (X5) des corps de roulement (5) de la première rangée de roulement de corps de roulement ainsi que les axes de corps de roulement (X6) des corps de roulement (6) de la deuxième rangée de roulement de corps de roulement tournant sur une première enveloppe conique (K1) ou une deuxième enveloppe conique (K2), les pointes (S1, S2) des enveloppes coniques respectives (K1, K2) étant situées dans une région intermédiaire entre les côtés frontaux axiaux extérieurs (FA3, FA4) des bagues de palier internes (3, 4), et un dispositif de serrage (T) étant prévu pour le serrage axial des bagues de palier externes (1, 2) contre les corps de roulement (5, 6) de la première et de la deuxième rangée de roulement de corps de roulement, **caractérisé en ce que** le dispositif de serrage (T) présente plus de deux commandes de réglage, **en ce que** les commandes de réglage sont disposées au niveau de positions successives dans la direction périphérique axialement entre les deux bagues de palier externes (1, 2), et **en ce que** le dispositif de serrage (T) agit au moyen de ses commandes de réglage axialement des deux côtés directement sur les surfaces frontales tournées axialement l'une vers l'autre des deux bagues de palier externes (1, 2).

2. Agencement de palier à rouleaux sphériques axial selon la revendication 1, **caractérisé en ce que** les deux bagues de palier externes (1, 2) s'appuient axialement à l'intérieur contre un étage annulaire (G1), tourné radialement vers l'intérieur, d'un boîtier (G) de l'agencement de palier à rouleaux sphériques axial, et **en ce que** le dispositif de serrage (T) est disposé avec ses plus de deux commandes de réglage radialement à l'intérieur de l'étage annulaire (G1) du boîtier (G).

3. Agencement de palier à rouleaux sphériques axial selon la revendication 1 ou 2, **caractérisé en ce que** le dispositif de serrage (T) est inséré avec ses plus de deux commandes de réglage dans une chambre annulaire qui est formée par un élément annulaire (14) servant de composant de support.

4. Agencement de palier à rouleaux sphériques axial selon la revendication 3, **caractérisé en ce que** le dispositif de serrage (T) est disposé au moyen de l'élément annulaire (14) de manière flottante entre les deux bagues de palier externes (1, 2).

5. Agencement de palier à rouleaux sphériques axial selon l'une quelconque des revendications 1 à 4, **caractérisé en ce que** les commandes de réglage sont réalisées sous forme de modules de serrage (M1, M2, M2), chaque module de serrage (M1, M2, M2) présentant au moins un moteur de réglage électrique (13) et une commande à broche (12) ou une vis d'entraînement à roulement planétaire ou une vis d'entraînement à billes.

6. Agencement de palier à rouleaux sphériques axial selon la revendication 5, **caractérisé en ce que** chaque module de serrage (M1, M2, M2) présente un dispositif de mesure de force (15) pour la mesure de la force de serrage générée au moyen du dispositif de serrage électromécanique (T) sur les deux bagues de palier externes (1, 2).

7. Agencement de palier à rouleaux sphériques axial selon l'une quelconque des revendications 3 à 6, **caractérisé en ce que** le dispositif de serrage (T) s'appuie au moyen de l'élément annulaire (14) radialement à l'extérieur contre l'étage annulaire (G1), tourné radialement vers l'intérieur, d'un boîtier de palier (G).
